Europäisches Patentamt

European Patent Office

Office européen des brevets

(11) Publication number: 0 163 620
A1

# EUROPEAN PATENT APPLICATION

(21) Application number: 85850140.6

(22) Date of filing: 25.04.85

(51) Int. Cl.⁴: **F 04 D 15/00**
**F 16 K 11/056**

(30) Priority: 08.05.84 SE 8402458

(43) Date of publication of application:
04.12.85 Bulletin 85/49

(84) Designated Contracting States:
AT DE FR GB IT

(71) Applicant: Flygt AB
Box 1309
S-171 25 Solna(SE)

(72) Inventor: Daveman, Charles
Lavettvägen 25 I
S-172 47 Sundbyberg(SE)

(74) Representative: Larsson, Sten
Flygt AB Box 1309
S-171 25 Solna(SE)

(54) Non-return device.

(57) The invention concerns a device for preventing back flow
of liquid through an outlet pipe from a pump during times
when the pump does not operate.

A non-return valve (3) is arranged in the outlet pipe (2)
from the pump (1) designed as a three-way valve. A ball (7) in
the valve alternatively closes the inlet (4) to the valve and the
outlet to a drainage pipe (6) resp. The ball (7) then takes one
position which closes the drainage pipe (6) when the pump
operates, while the drainage pipe is open and the inlet (4)
closed when the pump is stopped.

Fig. 1

EP 0 163 620 A1

0163620

## A NON-RETURN DEVICE

When pumping liquids a so-called submersible pump, the pump unit being entirely submersed in the pumped liquid, is vary often used. The advantage is that no suction line is needed as the pump inlet is always located below the surface.

A problem that sometimes is of major importance is to prevent the liquid in the outlet pipe from flowing back when the pump does not operate. This problem is of course most important at big heads, such as in mines, as then big amounts of fluid may flow backwards from a high level. If this is allowed for periods when the pump does not operate, this will cause the pump to operate as a turbine and the impeller will rotate backwards at a great speed until the outlet pipe is emptied. If the pump should be started during such a period, this would mean damage of the pump causing expensive repairs and a stop to the mining.

In order to eliminate these risks a non-return valve has been arranged in the outlet pipe immediately above the pump, preventing the liquid above the valve from flowing backwards through the pump. Such a valve, described in the German Offenlegungschrift 1057 840, may function satisfactory if the liquid does not contain solid bodies and if the stops are not too long.

Water in mines however, often contains lots of sand and sludge cuttings which after a while sedimente in the outlet pipe and enrich in the valve. This means that the valve may be difficult to open and that it sometimes gets so heavily loaded, that it cannot be opened by the pressure when the pump starts. Tha valve must then be rinsed manually.

In order to solve this problem the non-return valve according to this invention is provided with a drainage pipe for taking away the liquid in the outlet pipe above the valve. The drainage pipe is automatically closed as soon as the pump starts operating, the closure of the valve and the drainage pipe resp. being carried out by the same valve body.

The invention is described more closely below with reference to the enclosed drawings.

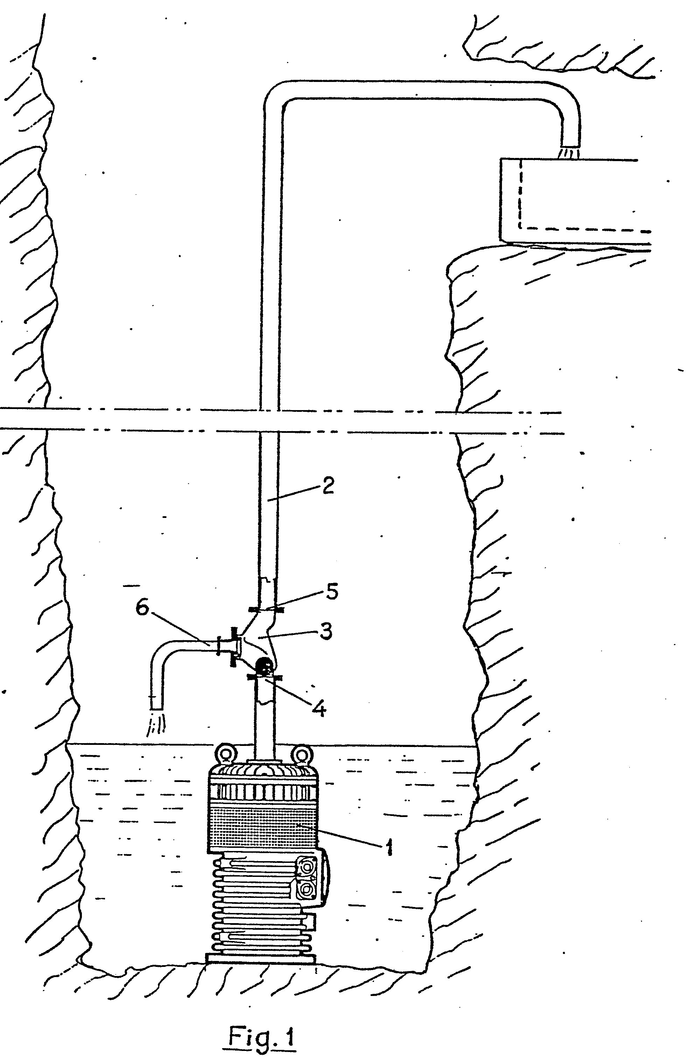

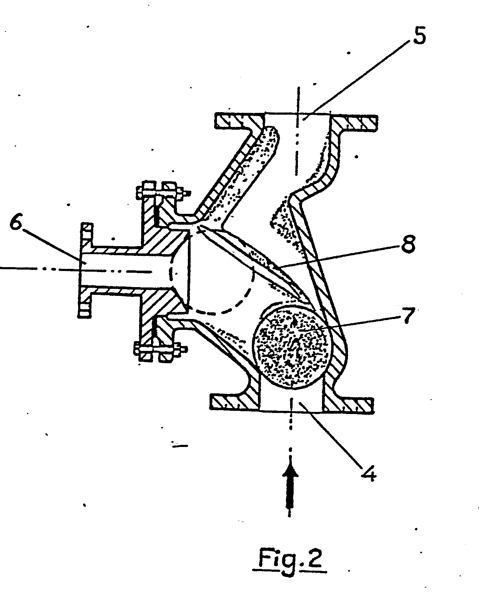

Fig 1 shows a device accorrding to the invention arranged in a system, while Fig 2 shows a detailed view through the valve.

In the drawings 1 stands for a submersible pump unit having an outlet pipe, pressure pipe, 2. 3 stands for a non-return valve having an inlet and an outlet 4 and 5 resp, 6 a drainage pipe, 8 a valve ball and 8 guides.

When the pump operates the liquid is transported through the outlet pipe 2 up to a level which in mines may be situated several hundred meters above the pump. The liquid pressure then presses the valve body 7 upwards closing the outlet to the drainage pipe, thus preventing the liquid from going out that way.

When the pump stops the body 7 will be influenced by gravity as well as by the pressure from the liquid in the pipe 2 above the valve and being moved towards the inlet 5 to the valve, thus preventing the liquid from flowing backwards through the pump 1. Simultaneously the drainage pipe 6 is opened, letting all liquid in the pipe above the valve to flow out, without acting on the pump. It is thus secured that solid bodies in the liquid is prevented from being collected in the valve and making it impossible to open when the pump restarts.

The invention is thus the valve with its three connections and the automatic alternative closure of two of them as well as the valve arranged in the outlet pipe from a pump

0163620

and the drainage of said pipe. There are of cause also other types of three-way valves which are possible to use.

CLAIMS                                    0163620

1.   A device for preventing backflowing of liquid from a pressure pipe through a pump, c h a r a c t e r i z e d in, that it comprises a non-return valve (3) arranged in the pressure pipe (2) near the pump (1), which valve automatically starts functioning as soon as the pump stops operating and that a drainage pipe (6) is connected to the valve for taking away the liquid in the pipe above the valve, which drainage pipe is automatically closed as soon as the pump starts operating, the closing of the valve and the drainage pipe (6) resp being carried out by one and the same valve body (7).

2.   A device according to claim 1, c h a r a c t e r i z e d in, that the valve (3) is a three-way ball valve, the ball (7) being arranged to close the drainage pipe (6) and the pipe from the pump (1) alternatively.

Fig.1

Fig.2

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 401 254 (LANNERT)<br>* Page 1, column 1, lines 1-8, 21-31; page 2, column 1, lines 32-28, 64-71; figures 1,2 * | 1 | F 04 D 15/00<br>F 16 K 11/056 |
| Y | | 2 | |
| X | US-A-1 612 685 (WITTMAN)<br>* Lines 1-7, 49-58; figures 1,2 * | 1 | |
| X | US-A-3 211 102 (KEEHAN)<br>* Column 2, line 57 - column 3, line 25; figures 1-3 * | 1 | |
| A | DE-A-1 403 870 (SIEBECK)<br>* Page 1, lines 1-12; figure 1 * | 1 | |
| Y | FR-A-2 429 948 (MASURE)<br>* Page 1, line 30 - page 2, line 9; page 4, line 28 - page 5, line 20; figures 1-4 * | 2 | TECHNICAL FIELDS SEARCHED (Int. Cl.4)<br><br>F 04 D<br>F 16 K |
| A | US-A-2 807 275 (STEIDLEY)<br>* Column 1, lines 15-17; column 2, lines 22-72; figures 1,2 * | 2 | |

The present search report has been drawn up for all claims

| Place of search | Date of completion of the search | Examiner |
|---|---|---|
| THE HAGUE | 16-08-1985 | WALVOORT B.W. |